# FASCICULE DE BREVET EUROPEEN

(11) **EP 1 312 405 B1**
(45) Date de publication et mention de la délivrance du brevet: **22.02.2006**
(21) Numéro de dépôt: 02292799.0
(22) Date de dépôt: 08.11.2002
(51) Int. Cl.: B01D 29/21

(54) **Insert filtrant pour filtre à liquide de moteur à combustion interne, filtre comprenant un tel insert filtrant et véhicule comprenant un tel filtre**
Filterelement für Flüssigkeitfilter eines Verbrennungsmotors, Filter mit einem solchen Filterelement und Kraftfahrzeug mit einem solchen Filter
Filter element for liquid filter of an internal combustion engine, filter comprising such a filter element and vehicle comprising such a filter

(30) Priorité: 19.11.2001 FR 0114933
(43) Date de publication de la demande: 21.05.2003
(73) Titulaire: FILTRAUTO, 78180 Montigny le Bretonneux (FR)
(72) Inventeur: Petillon, Nicolas, 14790 Fontaines-Etoupefour (FR); Pigeau, Jean-Michel, 91220 Bretigny sur Orge (FR)
(74) Mandataire: Burbaud, Eric

(56) Documents cités:
- EP-A- 0 791 387
- WO-A-97/26980
- US-A- 4 128 251
- US-A- 6 159 261

## Description

La présente invention est relative aux inserts filtrants pour filtres à liquide de moteurs à combustion interne, aux filtres comprenant de tels inserts filtrants et aux véhicules comprenant de tels filtres.

Plus particulièrement, l'invention concerne un insert filtrant pour filtre à liquide chaud de moteur à combustion interne, présentant une paroi latérale annulaire poreuse qui délimite un espace intérieur creux et qui s'étend selon un axe central entre deux faces d'extrémité reliées de façon étanche respectivement à des premier et deuxième flasques d'extrémité étanches, au moins le premier flasque d'extrémité présentant une ouverture centrale qui communique avec l'espace intérieur creux de l'insert filtrant, ledit premier flasque d'extrémité formant un bourrelet annulaire qui entoure ladite ouverture centrale et qui fait saillie axialement à l'opposé de la paroi latérale poreuse, ce bourrelet étant adapté pour venir s'appliquer de façon étanche contre une portée annulaire rigide.

Le document FR-A-2 745 196 (ou EP-A-0791387) décrit un exemple d'un tel insert filtrant, qui donne toute satisfaction au plan de son fonctionnement technique.

Le document WO 97/26980 décrit également un exemple d'un tel insert filtrant, dans lequel le premier flasque formant un bourrelet annulaire peut être réalisé en polyuréthane ou en métal.

La présente invention a notamment pour but de perfectionner encore les inserts filtrants de ce type, notamment de façon que ledit premier flasque en matière synthétique soit mieux compatible avec différents types de paroi latérale poreuse, et notamment avec les parois latérales réalisées en papier ou similaire plissé avec des plis couchés (par exemple tel que décrit dans le document WO-A-99/42199) .

A cet effet, selon l'invention, un insert filtrant du genre en question est caractérisé en ce qu'au moins le premier flasque d'extrémité est constitué uniquement d'une résine thermoplastique collante à chaud (résine connue sous le nom de "hot melt" par l'homme du métier) qui est adaptée pour fluer sous contrainte à partir d'une température limite comprise entre 50 et 150°C.

Grâce à ces dispositions, les flasques en résine thermoplastiques sont compatibles notamment avec les papiers filtre ou similaires plissés en formant des plis couchés.

Au cours de l'utilisation du filtre, au moins le bourrelet du premier flasque d'extrémité se déforme par fluage de façon à épouser exactement la portée annulaire sur laquelle il est appliqué, dès que l'insert filtrant est utilisé pour filtrer du liquide chaud pendant le fonctionnement du moteur à combustion interne. On obtient ainsi une étanchéité parfaite et durable entre le flasque et la portée annulaire.

Il est remarquable que cette étanchéité soit obtenue sans avoir à renforcer le flasque par un insert de feutre, carton ou autre, alors que de tels inserts auraient généralement été considérés comme indispensables dans l'art antérieur compte tenu du fluage de la résine thermoplastique collante à chaud.

Dans des modes de réalisation préférés de l'insert filtrant selon l'invention, on peut éventuellement avoir recours en outre à l'une et/ou à l'autre des dispositions suivantes :
- le bourrelet est situé au voisinage de l'ouverture centrale du premier flasque d'extrémité ;
- l'insert filtrant comporte en outre un tube ajouré rigide qui est entouré par la paroi annulaire poreuse dudit insert filtrant et qui s'étend axialement entre les deux flasques d'extrémité, le bourrelet étant disposé dans le prolongement dudit tube ajouré ;
- le bourrelet fait saillie sur une hauteur comprise entre 0,5 et 2 mm par rapport au reste du premier flasque d'extrémité ;
- la résine thermoplastique formant le premier flasque d'extrémité est à base de copolyamide ;
- la paroi latérale annulaire comprend au moins une feuille souple poreuse formant une succession de plis à arêtes axiales, ces plis se présentant, vus en section dans un plan radial, sous la forme d'ailettes incurvées toutes dans un même sens angulaire ;
- les deux flasques d'extrémité de l'insert filtrant sont réalisés dans le même matériau et le deuxième flasque d'extrémité comporte une ouverture centrale entourée par un bourrelet annulaire formé d'une seule pièce avec ledit deuxième flasque d'extrémité et faisant saillie axialement à l'opposé de la paroi latérale poreuse.

Par ailleurs, l'invention a également pour objet un filtre à liquide chaud pour moteur à combustion interne comportant un boîtier rigide dans lequel est disposé un insert filtrant tel que défini ci-dessus, le premier flasque d'extrémité étant pressé contre une portée annulaire rigide, avec une force élastique suffisante pour entraîner un écrasement au moins partiel du bourrelet par fluage à une température comprise entre 50 et 150°C.

Avantageusement, ladite force élastique est suffisante pour entraîner en outre une pénétration partielle de la portée annulaire rigide dans le premier flasque d'extrémité en dehors du bourrelet.

A cet effet, ladite force élastique peut par exemple être supérieure à 80 N.

Selon un mode de réalisation de l'invention, les deux flasques d'extrémité sont réalisés dans le même matériau et le deuxième flasque d'extrémité de l'insert filtrant comporte une ouverture centrale entourée par un bourrelet annulaire faisant saillie axialement à l'opposé de la paroi latérale poreuse, le bourrelet annulaire du premier flasque d'extrémité étant appliqué contre une première portée annulaire qui appartient au boîtier du filtre et qui entoure un passage de sortie de liquide ménagé dans ledit boîtier, tandis que le bourrelet annulaire du deuxième flasque d'extrémité est en contact étanche avec une deuxième portée annulaire appartenant à un boîtier de clapet de by-pass, lequel boîtier de clapet de by-pass est pressé élastiquement contre l'insert filtrant.

Enfin, l'invention a aussi pour objet un véhicule comportant un moteur à combustion interne et un filtre tel que défini ci-dessus pour filtrer un liquide, ledit moteur à combustion interne étant adapté pour chauffer ledit liquide à une température normale de fonctionnement comprise entre 50 et 150°C, et ladite résine thermoplastique étant adaptée pour fluer sous contrainte à ladite température normale de fonctionnement. Avantageusement, le filtre en question peut être un filtre à huile.

D'autres caractéristiques et avantages de l'invention apparaîtront au cours de la description suivante d'une de ses formes de réalisation, donnée à titre d'exemple non limitatif, en regard des dessins joints.

Sur les dessins:
- la figure 1 est une vue schématique d'un véhicule comportant un filtre selon la présente invention,
- la figure 2 est une vue en coupe axiale d'un filtre selon une forme de réalisation de l'invention, en cours d'utilisation,
- la figure 3 est une vue partielle en perspective de l'insert filtrant appartenant au filtre de la figure 2, avant usage,
- et la figure 4 est une vue partielle en coupe axiale de l'insert de la figure 3, toujours avant usage.

Sur les différentes figures, les mêmes références désignent des éléments identiques ou similaires.

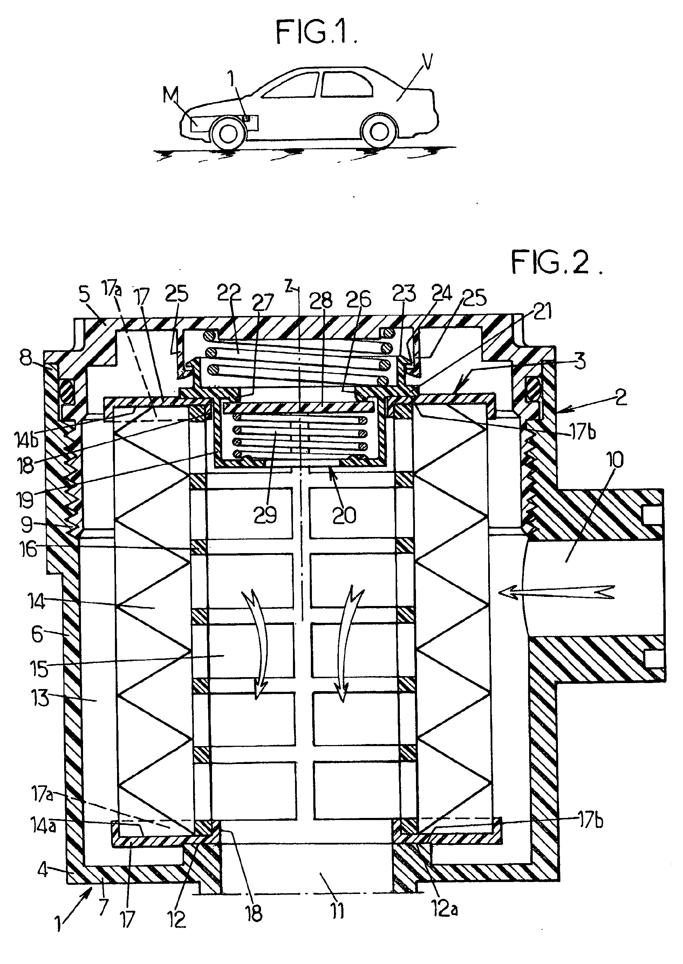

La figure 1 représente un véhicule automobile V comprenant un moteur à combustion interne M doté d'un filtre 1 pour filtrer un liquide chauffé par le moteur M. Le filtre 1 peut notamment être un filtre à huile.

Comme représenté sur la figure 2, le filtre 1 comprend un boîtier 2 dans lequel est disposé un insert filtrant 3 remplaçable.

Le boîtier 2, qui peut être réalisé par exemple en matière plastique ou en un autre matériau, comporte une cuve 4 fermée de façon étanche par un couvercle 5.

La cuve 4, qui dans l'exemple représenté présente une forme cylindrique de révolution, comporte une paroi latérale annulaire 6 qui s'étend entre une extrémité fermée par un fond 7 et une extrémité ouverte 8 dotée d'un filetage 9 dans lequel se visse le couvercle 5 pour fermer le boîtier 2.

On notera que le couvercle 5 pourrait être fixé par tout autre moyen à l'extrémité ouverte 8 de la paroi latérale 6, par exemple par un montage à baïonnette, ou autre.

Par ailleurs, le boîtier 2 comporte un passage d'entrée de liquide 10 et un passage de sortie de liquide 11. Dans l'exemple représenté, le passage de sortie de liquide 11 est ménagé au centre du fond 7 et est délimité extérieurement par un rebord 12 annulaire faisant saillie axialement vers l'intérieur du boîtier 2. Le passage d'entrée de liquide 10, quant à lui, peut être constitué par un orifice ménagé dans la paroi latérale 6 de la cuve, comme dans l'exemple représenté, mais ce passage d'entrée pourrait être ménagé en tout autre emplacement du boîtier 2, par exemple dans le fond 7, radialement à l'extérieur du passage de sortie 11.

L'insert filtrant 3, qui est disposé dans le volume intérieur 13 délimité par le boîtier 2, présente également une forme générale cylindrique de révolution dans l'exemple représenté. Cet insert filtrant 3 comporte une paroi latérale annulaire poreuse 14 qui délimite un espace intérieur creux 15 et qui s'étend selon l'axe central Z entre deux faces d'extrémité 14a, 14b.

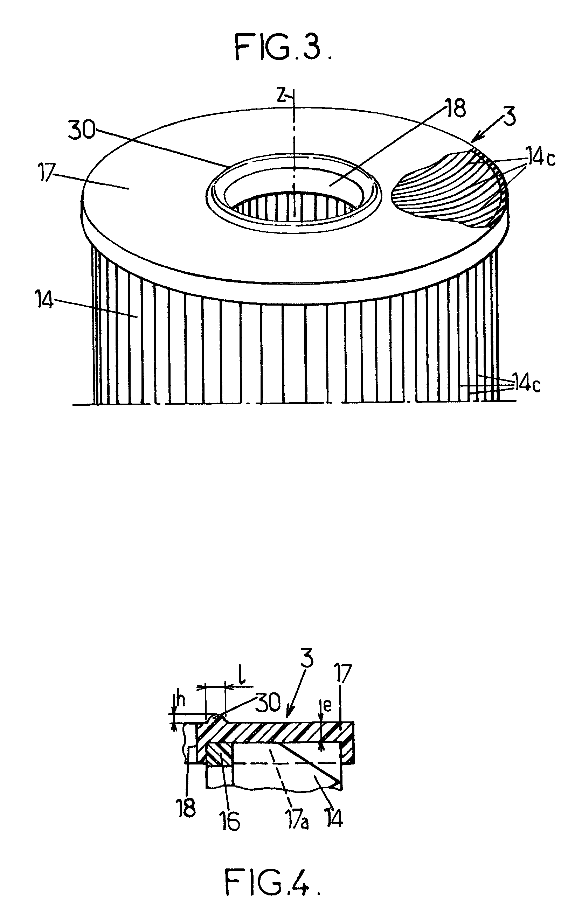

A titre d'exemple, comme on peut le voir sur la figure 3, la paroi latérale annulaire poreuse 14 peut comporter une feuille souple poreuse (papier filtre ou similaire) formant une succession de plis dont les arêtes sont parallèles à l'axe Z. Ces plis peuvent se présenter, vus en section dans un plan radial, sous la forme d'ailettes incurvées toutes dans un même sens angulaire, inclinées par rapport à la direction radiale, comme décrit par exemple dans le document WO-A-99/42199.

De plus, la paroi latérale annulaire poreuse 14 est soutenue radialement vers l'intérieur par un tube ajouré 16 sensiblement rigide (figure 2) qui est entouré par ladite paroi latérale annulaire poreuse 14 et qui s'étend axialement entre les deux faces d'extrémité 14a, 14b de ladite paroi latérale.

Chacune de ces faces d'extrémité 14a, 14b est fermée de façon étanche par un flasque d'extrémité 17 en résine thermoplastique, qui est surmoulé sur ladite face d'extrémité, de préférence en débordant légèrement de cette face d'extrémité radialement vers l'intérieur et radialement vers l'extériéur, et de préférence en pénétrant de quelques millimètres dans ladite paroi latérale annulaire poreuse 14, dans la zone 17a visible sur la figure 1.

Dans l'exemple représenté, chacun des flasques 17 comporte une ouverture centrale 18 :
- l'un des flasques d'extrémité 17 est appliqué avec étanchéité contre une portée annulaire 12a plane et perpendiculaire à l'axe Z, formée par le rebord 12, de façon que l'ouverture 18 de ce flasque d'extrémité fasse communiquer l'espace intérieur 15 de l'insert filtrant avec le passage de sortie 11,
- et l'ouverture centrale 18 du flasque d'extrémité 17 opposé est obturée de façon étanche par le boîtier rigide 19 d'un clapet de by-pass 20, lequel boîtier 19 forme une portée annulaire 21, plane et perpendiculaire à l'axe Z, qui s'applique avec étanchéité contre la face extérieure du flasque d'extrémité 17 autour de l'ouverture centrale 18.

Un ressort hélicoïdal 22, ou tout autre organe élastique, est par ailleurs interposé entre le boîtier 19 du clapet de by-pass et la face intérieure du couvercle 5, de façon à appliquer avec étanchéité la portée annulaire 21 du boîtier 19 contre le flasque 17 correspondant et de façon à appliquer simultanément le flasque opposé 17 contre la portée annulaire 12a correspondante. Le ressort 22 peut par exemple appliquer à l'insert filtrant 3 une force de compression comprise entre 80 et 200 N, notamment de l'ordre de 100 N.

Dans l'exemple représenté, le boîtier 19 du clapet de by-pass est en outre retenu sous le couvercle 5 par clipsage, avec un certain jeu axial et en permettant avantageusement une rotation relative entre le couvercle 5 et le boîtier 19. A cet effet, dans l'exemple considéré ici, le boîtier 19 du clapet de by-pass comporte une couronne 23 faisant saillie axialement vers le couvercle 5 et prolongée radialement vers l'extérieur par un rebord annulaire 24 sous lequel s'engagent par clipsage des crochets élastiques 25 qui s'étendent à partir de la face intérieure du couvercle 5.

Par ailleurs, dans l'exemple représenté, le boîtier 19 du clapet de by-pass comporte classiquement un orifice 26 qui communique avec l'espace intérieur 15 de l'insert filtrant et qui forme un siège de clapet 27 normalement obturé par un organe de clapet 28, lequel est sollicité par un ressort 29 prenant appui dans le boîtier 19, de sorte que le clapet de by-pass 20 s'ouvre uniquement lorsqu'il règne une différence de pression trop élevée entre l'amont et l'aval de l'insert filtrant.

On notera que, le cas échéant, le flasque d'extrémité 17 situé vers le couvercle 5 pourrait éventuellement être plein et ne pas comporter de clapet de by-pass.

Selon l'invention, les flasques d'extrémité 17 de l'insert filtrant (ou tout au moins le flasque d'extrémité 17 comportant l'ouverture centrale 18, si un seul de ces flasques comporte une telle ouverture) comportent, avant montage de l'insert filtrant dans le boîtier 2 du filtre, un bourrelet annulaire 30 qui entoure ladite ouverture centrale 18 et qui fait saillie axialement à l'opposé de la paroi latérale annulaire poreuse 14 (voir figures 3 et 4).

Comme représenté sur la figure 4, le bourrelet 30 peut présenter par exemple une hauteur h d'environ 0,5 à 2 mm, notamment d'environ 1 mm, une largeur 1 comprise par exemple entre 1 et 3 mm, notamment d'environ 2 mm, le bourrelet 30 se situant de préférence dans le prolongement du tube ajouré 16. Le flasque d'extrémité 17 présente par ailleurs une épaisseur e de quelques millimètres, par exemple d'environ 1 à 2 mm, au-delà de la face d'extrémité correspondante de la paroi latérale annulaire poreuse 14.

Enfin, les flasques d'extrémité 17 (ou le flasque comportant l'ouverture 18 si un seul des flasques est doté d'une telle ouverture) sont réalisés en une résine thermoplastique collante à chaud ("hot melt"). Il peut s'agir par exemple de la résine commercialisée sous la marque "THERMELT 193", vendue par la Société française TRL. Plus généralement, on pourra utiliser des résines thermoplastiques à base de copolyamide, présentant de préférence un point de ramollissement compris entre 50 et 250°C (notamment environ 200°C) et adaptée pour fluer sous contrainte à partir d'une température limite comprise entre 50 et 150°C (notamment environ 100°C).

Ainsi, comme on peut le voir sur la figure 2, lorsque l'insert filtrant 3 se trouve à l'intérieur du boîtier 2, au moins les bourrelets 30 s'aplatissent par effet de fluage du fait de la température relativement élevée de l'huile ou du liquide à filtrer chauffé par le moteur (classiquement de l'ordre de 100 à 150°C dans le cas de l'huile), sous l'action de la compression du ressort 22.

Il en résulte un contact intime entre les bourrelets 30 et les portées annulaires 12a, 21 correspondantes, d'où une excellente étanchéité autour des ouvertures 18 des flasques 17.

Avantageusement, comme on peut le voir sur la figure 2, l'effet de fluage susmentionné peut être suffisant pour non seulement écraser les bourrelets 30, mais encore faire pénétrer légèrement les portées annulaires 12a, 21 dans l'épaisseur e des flasques, dans des zones 17b. Cette pénétration a de préférence lieu sur une profondeur de quelques dixièmes de millimètre, généralement inférieure à un millimètre.

On notera que, malgré l'effet de fluage susmentionné, la présence initiale du bourrelet 30 sur les flasques d'extrémité continue à produire un effet même après écrasement desdits bourrelets et pénétration des portées annulaires 12a, 21 dans les flasques 17, en créant une ligne annulaire ayant une plus forte pression de contact entre les portées annulaires 12a, 21 et les flasques 17.

## Revendications

1. Insert filtrant (3) pour filtre à liquide chaud de moteur à combustion interne, présentant une paroi latérale annulaires poreuse (14) qui délimite un espace intérieur creux (15) et qui s'étend selon un axe central (Z) entre deux faces d'extrémité (14a, 14b) reliées de façon étanche respectivement des premier et deuxième flasques d'extrémité (17) étanches, au moins le premier flasque d'extrémité présentant une ouverture centrale (18) qui communique avec l'espace intérieur creux (15) de l'insert filtrant, le premier flasque d'extrémité (17) formant un bourrelet annulaire (30) qui entoure ladite ouverture centrale et qui fait saillie axialement à l'opposé du deuxième flasque d'extrémité, ce bourrelet (30) étant adapté pour venir s'appliquer de façon étanche contre une portée annulaire rigide (12a, 21),
**caractérisé en ce qu'**au moins le premier flasque d'extrémité (17) est constitué uniquement d'une résine thermoplastique collante à chaud qui est adaptée pour fluer sous contrainte à partir d'une température limite comprise entre 50 et 150°C.

2. Insert filtrant selon la revendication 1, dans lequel le bourrelet (30) est situé au voisinage de l'ouverture centrale (18) du premier flasque d'extrémité (17).

3. Insert filtrant selon l'une quelconque des revendications précédentes, comportant en outre un tube ajouré (16) rigide qui est entouré par la paroi latérale annulaire poreuse (14) dudit insert filtrant et qui s'étend axialement entre les deux flasques d'extrémité (17), le bourrelet (30) étant disposé dans le prolongement dudit tube ajouré.

4. Insert filtrant selon l'une quelconque des revendications précédentes, dans lequel le bourrelet (30) fait saillie sur une hauteur (h) comprise entre 0,5 et 2 mm par rapport au reste du premier flasque d'extrémité (I7).

5. Insert filtrant selon l'une quelconque des revendications précédentes, dans lequel la résine thermoplastique formant le premier flasque d'extrémité (17) est à base de copolyamide.

6. Insert filtrant selon l'une quelconque des revendications précédentes, dans lequel la paroi latérale annulaire poreuse (14) comprend au moins une feuille souple poreuse formant une succession de plis (14c) à arêtes axiales, ces plis se présentant, vus en section dans un plan radial, sous la forme d'ailettes incurvées toutes dans un même sens angulaire.

7. Insert filtrant selon l'une quelconque des revendications précédentes, dans lequel les deux flasques d'extrémité (17) de l'insert filtrant sont réalisés dans le même matériau et le deuxième flasque d'extrémité comporte une ouverture centrale (18) entourée par un bourrelet annulaire (30) formé d'une seule pièce avec ledit deuxième flasque d'extrémité et faisant saillie axialement à l'opposé du premier flasque d'extrémité.

8. Filtre à liquide chaud pour moteur à combustion interne comportant un boîtier rigide (2) dans lequel est disposé un insert filtrant (3) selon l'une quelconque des revendications précédentes, le premier flasque d'extrémité (17) étant pressé contre une portée annulaire (12a, 21) rigide, avec une force élastique suffisante pour entraîner un écrasement au moins partiel du bourrelet (30) par fluage à une température comprise entre 50 et 150°C.

9. Filtre selon la revendication 8, dans lequel ladite force élastique est suffisante pour entraîner en outre une pénétration partielle de la portée annulaire (12a, 21) rigide dans le premier flasque d'extrémité (17) en dehors du bourrelet (30).

10. Filtre selon la revendication 8 ou la revendication 9, dans lequel ladite force élastique est supérieure à 80 N.

11. Filtre selon l'une quelconque des revendications 8 à 10, dans lequel les deux flasques d'extrémité (17) sont réalisés dans le même matériau et le deuxième flasque d'extrémité (17) de l'insert filtrant comportent une ouverture centrale (18) entourée par un bourrelet annulaire (30) faisant saillie axialement à l'opposé de la paroi latérale annulaire poreuse (14), le bourrelet annulaire (30) du premier flasque d'extrémité (17) étant appliqué contre une première portée annulaire (12a) qui appartient au boîtier (2) du filtre et qui entoure un passage de sortie de liquide (11) ménagé dans ledit boîtier, tandis que le bourrelet annulaire (30) du deuxième flasque d'extrémité (17) est en contact étanche avec une deuxième portée annulaire (21) appartenant à un boîtier (19) de clapet de by-pass, lequel boîtier (19) de clapet de by-pass est pressé élastiquement contre l'insert filtrant (3) .

12. Véhicule comportant un moteur à combustion interne (M) et un filtre à liquide (1) selon l'une quelconque des revendications 8 à 11, ledit moteur à combustion interne (M) étant adapté pour chauffer ledit liquide à une température normale de fonctionnement comprise entre 50 et 150°C et ladite résine thermoplastique étant adaptée pour fluer sous contrainte à ladite température normale de fonctionnement.

13. Véhicule selon la revendication 12, dans lequel le filtre à liquide (1) est un filtre à huile.

## Claims

1. Filter element (3) for a hot liquid filter of an internal combustion engine having a porous annular lateral wall (14) which delimits an interior hollow space (15) and which extends according to a central axis (Z) between two end faces (14a, 14b) connected so as to realise a seal in respect of the first and second end caps (17), at least the first end cap having a central opening (18) which communicates with the hollow interior space (15) of the filter element, the first end cap (17) forming an annular bead (30) which surrounds said central opening and projects axially opposing the second end cap, this bead being adapted so as to realise a seal in respect of a rigid annular bearing surface (12a, 21),
**characterised in that** at least the first end cap (17) is made solely from a hot adhesive thermoplastic resin which is adapted to flow in a restricted way starting from a limited temperature between 50 and 150°C.

2. Filter element according to claim 1 wherein the bead (30) is situated in proximity to the central opening (18) of the first end cap (17).

3. Filter element according to any one of the preceding claims, also comprising a rigid perforated tube (16) which is surrounded by the porous annular wall (14) of said filter element and which extends axially between the two end caps (17), the bead (30) being arranged in extension of said perforated tube.

4. Filter element according to any one of the preceding claims wherein the bead (30) projects over a height (h) between 0.5 and 2 mm in relation to the rest of the first end cap (17).

5. Filter element according to any one of the preceding claims wherein the thermoplastic resin forming the first end cap (17) has a copolyamide base.

6. Filter element according to any one of the preceding claims wherein the porous annular lateral wall (14) has at least one porous flexible sheet forming a succession of pleats (14c) with axial edges, these pleats being, as seen in section in a radial plan, in the form of vanes which are all bent in the same angular direction.

7. Filter element according to any one of the preceding claims wherein the two end caps (17) of the filter element are realised in the same material and the second end cap has a central opening (18) surrounded by an annular bead (30) formed from a single part with said second end cap and projecting axially opposing the first end cap.

8. Hot liquid filter for an internal combustion engine having a rigid case (2), in which a filter element (3) according to any one of the preceding claims is arranged, the first end cap (17) being pressed against a rigid annular bearing surface (12a, 21), with a sufficient elastic force to bring about at least partial crushing of the bead (30) through flowing at a temperature between 50 and 150°C.

9. Filter according to claim 8 wherein said elastic force is sufficient to also bring about a partial penetration of the rigid annular bearing surface (12a, 21) in the first end cap (17) outside of the bead (30).

10. Filter according to claim 8 or claim 9 wherein said elastic force is greater than 80 N.

11. Filter according to any one of the claims 8 to 10 wherein the two end caps (17) are made from the same material and the second end cap (17) of the filter element have a central opening (18) surrounded by an annular bead (30) projecting axially opposing the porous annular lateral wall, the annular bead (30) of the first end cap (17) being applied against a first annular bearing surface (12a) which belongs to the case (2) of the filter and which surrounds the liquid outlet passage (11) arranged in said case whereas the annular bead (30) of the second end cap (17) realises a seal in respect of the second annular bearing surface (21) belong to a bypass valve case (19) which bypass valve case is pressed elastically against the filter element (3).

12. Vehicle comprising an internal combustion engine (M) and a liquid filter (1) according to any one of the preceding claims 8 to 11, said internal combustion engine (M) being adapted to heat said liquid to a normal operating temperature between 50 and 150°C and said thermoplastic resin being adapted to flow in a restricted way at said normal operating temperature.

13. Vehicle according to claim 12 wherein the liquid filter (1) is an oil filter.

## Patentansprüche

1. Filtereinsatz (3) für ein Warmflüssigkeitsfilter eines Verbrennungsmotors mit einer ringförmigen porösen Seitenwand (14), welche einen hohlen Innenraum (15) begrenzt und sich nach einer Zentralachse (Z) zwischen zwei Endflächen (14a, 14b) erstreckt, welche mit einem ersten beziehungsweise einem zweiten dichten Endflansch (17) abgedichtet verbunden sind, wobei mindestens der erste Endflansch eine mittige Öffnung (18) aufweist, welche mit dem hohlen Innenraum (15) des Filtereinsatzes kommuniziert, wobei der erste Endflansch (17) einen ringförmigen Wulst (30) bildet, welcher die genannte mittige Öffnung umgibt und axial entgegengesetzt zu dem zweiten Endflansch vorragt, wobei dieser Wulst (30) dazu angepasst ist, abgedichtet gegen eine starre ringförmige Auflagefläche (12a, 21) zum Aufliegen zu kommen,
**dadurch gekennzeichnet, dass**
mindestens der erste Endflansch (17) ausschließlich aus einem warmklebenden thermoplastischen Harz besteht, welches dazu angepasst ist, unter Belastung ab einer Grenztemperatur zwischen 50 und 150 °C zu kriechen.

2. Filtereinsatz nach Anspruch 1, bei dem der Wulst (30) benachbart zu der mittigen Öffnung (18) des ersten Endflansches (17) angeordnet ist.

3. Filtereinsatz nach einem der vorhergehenden Ansprüche, welches ferner ein starres durchbrochenes Rohr (16) aufweist, welches von der ringförmigen porösen Seitenwand (14) des genannten Filtereinsatzes umgeben ist und sich axial zwischen den zwei Endflanschen (17) erstreckt, wobei der Wulst (30) in der Verlängerung des genannten durchbrochenen Rohrs angeordnet ist.

4. Filtereinsatz nach einem der vorhergehenden Ansprüche, bei dem der Wulst (30) in Bezug auf den Rest des ersten Endflansches (17) auf einer zwischen 0,5 und 2 mm liegenden Höhe (h) vorragt.

5. Filtereinsatz nach einem der vorhergehenden Ansprüche, bei dem das den ersten Endflansch (17) bildende thermoplastische Harz auf Copolyamid-Basis ist.

6. Filtereinsatz nach einem der vorhergehenden Ansprüche, bei dem die ringförmige poröse Seitenwand (14) mindestens eine flexible poröse Folie umfasst, welche eine Aufeinanderfolge von Falten (14c) mit axialen Kanten bildet, wobei diese Falten sich in einem Schnitt in einer radialen Ebene gesehen in Form von Flügeln darstellen, welche alle in ein und derselben Winkelrichtung einwärts gekrümmt sind.

7. Filtereinsatz nach einem der vorhergehenden Ansprüche, bei dem die zwei Endflansche (17) des Filtereinsatzes aus demselben Material hergestellt sind und der zweite Endflansch eine mittige Öffnung (18) aufweist, welche von einem ringförmigen Wulst (30) umgeben ist, welcher einstückig mit dem genannten zweiten Endflansch ausgebildet ist und axial entgegengesetzt zu dem ersten Endflansch vorragt.

8. Warmflüssigkeitsfilter für Verbrennungsmotor mit einem starren Gehäuse (2), bei dem ein Filtereinsatz (3) nach einem der vorhergehenden Ansprüche angeordnet ist, wobei der erste Endflansch (17) gegen eine ringförmige starre Auflagefläche (12a, 21) mit einer elastischen Kraft gepresst ist, welche ausreicht, um ein zumindest teilweises Zusammendrücken des Wulstes (30) durch Kriechen bei einer Temperatur zwischen 50 und 150 °C zu bewirken.

9. Filter nach Anspruch 8, bei dem die genannte elastische Kraft ausreichend ist, um ferner ein teilweises Eindringen der ringförmigen starren Auflagefläche (12a, 21) in den ersten Endflansch (17) außerhalb des Wulstes (30) zu bewirken.

10. Filter nach Anspruch 8 oder nach Anspruch 9, bei dem die genannte elastische Kraft 80 N übersteigt.

11. Filter nach einem der Ansprüche 8 bis 10, bei dem die zwei Endflansche (17) des Filtereinsatzes aus demselben Material hergestellt sind und der zweite Endflansch (17) des Filtereinsatzes eine mittige Öffnung (18) aufweist, welche von einem ringförmigen Wulst (30) umgeben ist, welcher entgegengesetzt zu der ringförmigen porösen Seitenwand (14) vorragt, wobei der ringförmige Wulst (30) des ersten Endflansches (17) gegen eine erste ringförmige Auflagefläche (12a) aufliegt, welche zu dem Gehäuse (2) des Filters gehört und einen in dem genannten Gehäuse ausgebildeten Flüssigkeitsauslass (11) umgibt, während der ringförmige Wulst (30) des zweiten Endflansches (17) in abgedichtetem Kontakt mit einer zweiten ringförmigen Auflagefläche (21) steht, welche zu einem Gehäuse (19) eines Bypass-Ventils gehört, welches Bypass-Ventil-Gehäuse (19) elastisch gegen das Filtereinsatz (3) gepresst wird.

12. Fahrzeug mit einem Verbrennungsmotor (M) und einem Flüssigkeitsfilter (1) nach einem der Ansprüche 1 bis 11, wobei der genannte Verbrennungsmotor (M) angepasst ist, um die genannte Flüssigkeit auf eine normale Betriebstemperatur zwischen 50 und 150 °C aufzuheizen und das genannte thermoplastische Harz angepasst ist, um unter Belastung bei der genannten normalen Betriebstemperatur zu kriechen.

13. Fahrzeug nach Anspruch 12, bei dem das Flüssigkeitsfilter (1) ein Ölfilter ist.
